# EUROPÄISCHE PATENTSCHRIFT

(11) **EP 2 603 357 B1**
(45) Veröffentlichungstag und Bekanntmachung des Hinweises auf die Patenterteilung: **26.10.2016**
(21) Anmeldenummer: 11743778.0
(22) Anmeldetag: 03.08.2011
(51) Int. Cl.: G05B 19/4061, B25J 9/16, F16P 3/14

(54) **STEUERSYSTEM UND STEUERVERFAHREN FÜR EINEN ROBOTER**
CONTROL SYSTEM AND CONTROL METHOD FOR A ROBOT
SYSTÈME DE COMMANDE ET PROCÉDÉ DE COMMANDE POUR UN ROBOT

(30) Priorität: 09.08.2010 DE 102010033768
(43) Veröffentlichungstag der Anmeldung: 19.06.2013
(73) Patentinhaber: Dürr Systems AG, 74321 Bietigheim-Bissingen (DE)
(72) Erfinder: BLOCK, Torsten, 71154 Nufringen (DE); MEISSNER, Alexander, 70197 Stuttgart (DE)
(74) Vertreter: Beier, Ralph
(86) Internationale Anmeldenummer: PCT/EP2011/003892
(87) Internationale Veröffentlichungsnummer: WO 2012/019733

(56) Entgegenhaltungen:
- EP-A1- 2 175 333
- EP-A2- 0 658 832
- EP-A2- 1 035 953
- EP-A2- 1 046 470
- EP-A2- 1 403 746
- EP-A2- 2 199 037

## Beschreibung

Die Erfindung betrifft ein Steuersystem und ein entsprechendes Steuerverfahren zur Steuerung eines Roboters mit mehreren beweglichen Roboterachsen, insbesondere für einen Lackier-, Sealing-, Klebe- oder Handhabungsroboter in einer Anlage, insbesondere in einer Lackieranlage für Bauteile von Kraftfahrzeugen, wie beispielsweise PKW, Bussen oder LKW.

In modernen Lackieranlagen zum Lackieren, Kleben bzw. Versiegeln (Sealing) von Kraftfahrzeugkarosseriebauteilen werden üblicherweise mehrachsige Lackierroboter eingesetzt, die in relativ eng begrenzten Lackierkabinen oder Lackierstationen angeordnet sind, so dass Kollisionen zwischen den Lackierrobotern einerseits und Raumbegrenzungen (z.B. Kabinenwand, andere Roboter) und Personen in benachbarten Bereichen andererseits verhindert werden müssen. Zur Vermeidung derartiger Kollisionen existieren im Stand der Technik verschiedene Sicherheitskonzepte, die im Folgenden kurz beschrieben werden.

Bei einem herkömmlichen Sicherheitskonzept erfolgt in der zentralen Robotersteuerung eine Kollisionsüberwachung. Dies bedeutet, dass die zentrale Robotersteuerung nicht nur die einzelnen Antriebsregler der verschiedenen beweglichen Roboterachsen des Lackierroboters entsprechend einem vorgegebenen Steuerprogramm ansteuert, sondern auch prüft, ob bei der Abarbeitung des Steuerprogramms eine Kollision droht. Falls dies der Fall sein sollte, so kann die zentrale Robotersteuerung dann beispielsweise eine Notabschaltung einleiten. Bei diesem Sicherheitskonzept ist es weiterhin bekannt, eine Redundanz bei der Kollisionsüberwachung zu schaffen, indem die Ist-Stellung der einzelnen Roboterachsen des Lackierroboters durch ein redundantes Gebersystem erfasst wird, so dass die zentrale Robotersteuerung dann die von dem Steuerprogramm vorgegebenen Soll-Stellungen der einzelnen Roboterachsen mit den tatsächlich gemessenen Ist-Stellungen der einzelnen Roboterachsen vergleichen kann, wobei eine Abweichung zwischen Ist-Stellung und Soll-Stellung dann zur Einleitung einer Fehlermaßnahme (z.B. Notabschaltung) führt. Im Rahmen dieses Sicherheitskonzepts ist sowohl eine sichere Geschwindigkeitsüberwachung als auch eine sichere Positionsüberwachung möglich, wie es beispielsweise in EP 1 332 841 A2 beschrieben ist. Nachteilig an diesem Sicherheitskonzept ist jedoch die Tatsache, dass zur Schaffung einer Redundanz ein zusätzliches Gebersystem erforderlich ist, um die Ist-Stellungen der einzelnen Roboterachsen des Lackierroboters zu erfassen, so dass die Realisierung dieses Sicherheitskonzepts mit einem erheblichen Aufwand verbunden ist.

Bei einem anderen, beispielsweise aus EP 1 046 470 A2 bekannten Sicherheitskonzept werden die Sicherheitsmaßnahmen dagegen in die einzelnen Antriebsregler integriert, welche die einzelnen beweglichen Roboterachsen ansteuern und von der zentralen Robotersteuerung entsprechende Steuerbefehle über einen Datenbus erhalten. Im Rahmen dieses Sicherheitskonzepts sind verschiedene Sicherheitsfunktionen realisierbar, wie beispielsweise eine sichere Geschwindigkeitsreduzierung, ein sicheres Schrittmaß oder ein sicherer Stop. Problematisch bei diesem Sicherheitskonzept ist jedoch die Tatsache, dass die einzelnen Antriebsregler jeweils nur die Soll-Stellung und die Ist-Stellung der jeweiligen Roboterachse kennen, nicht dagegen die Stellung der anderen Roboterachsen. Dies bedeutet, dass die einzelnen Antriebsregler die Roboterstellung des Lackierroboters als Ganzes nicht kennen und deshalb nur auf der Ebene der einzelnen Roboterachsen eine Kollisionsüberwachung durchführen können. Dieses Sicherheitskonzept ermöglicht es dagegen nicht, eine Kollision des Roboters mit Raumbegrenzungen (z.B. Kabinenwand der Lackierkabine) oder Personen sicher zu verhindern. Darüber hinaus hat dieses Sicherheitskonzept den Nachteil, dass eine teurere Ausführung der einzelnen Antriebsregler notwendig wird. Ein weiterer Nachteil des Sicherheitskonzepts gemäß EP 1 046 470 A2 beruht darauf, dass die Kollisionsüberwachung das Drehmoment der jeweiligen Roboterachse überwacht und beim Überschreiten eines Grenzwerts eine Kollision annimmt. Dies bedeutet, dass erst dann eine Kollision erkannt wird, wenn die Kollision bereits erfolgt ist. Bei dem Sicherheitskonzept gemäß EP 1 046 470 A2 ist es dagegen nicht möglich, eine bevorstehende Kollision zu erkennen und rechtzeitig Gegenmaßnahmen (z.B. Notabschaltung) einzuleiten, bevor die Kollision tatsächlich eintritt.

Bei einem weiteren, beispielsweise aus EP 1 035 953 A1 bekannten Sicherheitskonzept ist schließlich eine separate zusätzliche Überwachungseinheit vorgesehen, die von der zentralen Robotersteuerung und den einzelnen Antriebsreglern getrennt ist und eine Kollisionsüberwachung durchführt, um eine Kollision des Lackierroboters mit Raumbegrenzungen oder Personen zu verhindern. Diese separate Überwachungseinheit verarbeitet die Signale der einzelnen Antriebsregler und der zentralen Robotersteuerung und führt die Kollisionsüberwachung unabhängig von den Antriebsreglern und der zentralen Robotersteuerung durch, so dass die separate Überwachungseinheit autark eine sichere Abschaltung des Lackierroboters vornehmen kann. Nachteilig an diesem Sicherheitskonzept ist jedoch die Tatsache, dass eine separate Überwachungseinheit erforderlich ist, was mit erheblichen zusätzlichen Kosten verbunden ist.

Ferner ist zum Stand der Technik hinzuweisen auf DE 103 42 471 A1, DE 102 26 140 A1, EP 0 658 832 A2 und DE 196 34 055 B4.

Schließlich ist zum Stand der Technik hinzuweisen auf EP 0 658 832 A2, EP 1 403 746 A2 und EP 2 199 037 A2.

Im Stand der Technik wird die Transformationsberechnung zur Ermittlung der Roboterstellung des Tool Center Points aus den Achsstellungen der einzelnen Roboterachsen jedoch durchgehend in der zentralen Robotersteuerung durchgeführt. Dies bedingt jedoch eine zentrale Kollisionsüberwachung in der zentralen Robotersteuerung, was eine redundante Durchführung der Kollisionsüberwachung verhindert.

Der Erfindung liegt deshalb die Aufgabe zugrunde, ein neues Sicherheitskonzept zu schaffen, das einerseits möglichst einfach ist und andererseits eine möglichst sichere Kollisionsüberwachung ermöglicht.

Diese Aufgabe wird durch ein erfindungsgemäßes Steuersystem bzw. ein erfindungsgemäßes Steuerverfahren gemäß den nebengeordneten Ansprüchen gelöst.

Die Erfindung umfasst die allgemeine technische Lehre, dass einer der Antriebsregler zusätzlich zu den herkömmlichen Funktionen zur Ansteuerung der jeweiligen Roboterachse eine Überwachungseinheit aufweist, die eine Kollisionsüberwachung durchführt, um eine Kollision des Roboters mit Raumbegrenzungen oder Personen zu verhindern.

Der im Rahmen der Erfindung verwendete Begriff einer Kollisionsüberwachung bedeutet vorzugsweise, dass eine bevorstehende Kollision erkannt wird, damit rechtzeitig Gegenmaßnahmen (z.B. Notabschaltung) eingeleitet werden können, um die Kollision zu verhindern. Der Begriff der Kollisionsüberwachung umfasst jedoch auch Erfindungsvarianten, bei denen eine bereits erfolgte Kollision erkannt wird, damit dann Fehlermaßnahmen eingeleitet werden, um die Folgen der Kollision zu minimieren.

In dem bevorzugten Ausführungsbeispiel der Erfindung weist nur einer der Antriebsregler eine solche Überwachungseinheit zur Kollisionsüberwachung auf, während die anderen Antriebsregler in herkömmlicher Weise ausgeführt sein können und keine Kollisionsüberwachung durchführen. Dies ist vorteilhaft, weil dann nur ein geringer zusätzlicher Aufwand entsteht, da die meisten Antriebsregler in herkömmlicher Weise ausgeführt sein können. Es besteht jedoch grundsätzlich auch die Möglichkeit, dass mehrere oder sogar alle Antriebsregler eine Überwachungseinheit aufweisen, um eine Kollisionsüberwachung durchzuführen. Dies könnte vorteilhaft sein, um eine zusätzliche Redundanz bei der Kollisionsüberwachung zu schaffen.

Weiterhin ist zu erwähnen, dass der im Rahmen der Erfindung verwendete Begriff einer Überwachungseinheit sowohl eine Hardware-Lösung als auch eine Software-Lösung umfasst. Es ist also im Rahmen der Erfindung möglich, dass es sich bei der Überwachungseinheit um ein Software-Modul handelt, das in die Software des Antriebsreglers integriert ist und die Kollisionsüberwachung durchführt. Es ist jedoch alternativ auch möglich, dass es sich bei der Überwachungseinheit um ein Hardware-Modul handelt, das in die Hardware des Antriebsreglers integriert ist und die Kollisionsüberwachung durchführt.

In dem bevorzugten Ausführungsbeispiel der Erfindung berücksichtigt die Überwachungseinheit in dem einen Antriebsregler bei der Kollisionsüberwachung nicht nur die Achsstellung der zugehörigen Roboterachse, die über den zugehörigen Geber bereitgestellt wird, sondern auch die Achsstellungen der anderen Roboterachsen. Hierzu sind die Antriebsregler untereinander über eine Datenverbindung (z.B. Datenbus) miteinander verbunden, so dass der Antriebsregler mit der integrierten Überwachungseinheit die Achsstellungen der anderen Roboterachsen von den zugehörigen Antriebsreglern und den zugehörigen Gebern abfragen kann. Im Gegensatz zu dem eingangs beschriebenen herkömmlichen Sicherheitskonzept mit einer Integration der Kollisionsüberwachung in die Antriebstechnik besteht hierbei also die Möglichkeit, dass die Achsstellungen sämtlicher Roboterachsen bei der Kollisionsüberwachung berücksichtigt werden können, so dass das erfindungsgemäße Sicherheitskonzept eine Kollision des Roboters mit Raumbegrenzungen oder Personen sicher verhindern kann.

Bei der Datenverbindung zwischen den einzelnen Antriebsreglern kann es sich um ein Standardbussystem handeln, das auch bei herkömmlichen Steuersystemen für Roboter Anwendung findet. Alternativ besteht jedoch auch die Möglichkeit, dass die Übertragung der einzelnen Achsstellungen zwischen den Antriebsreglern über ein sicheres Bussystem erfolgt, wie beispielsweise "CIP-Safety" (CIP: Common Industrial Protocol), "Sercos" (Serial Realtime Communication System), "Profisafe", "Open Safety", "Safety Net p" oder vergleichbare Systeme. Die Realisierung der erforderlichen Sicherheit bei der Datenübertragung kann also wahlweise durch eine geeignete hardwaremäßige Auslegung oder durch softwaretechnische Maßnahmen erfolgen.

In dem bevorzugten Ausführungsbeispiel der Erfindung ist jedem der Antriebsregler ein Geber zugeordnet, der die Achsstellung der von dem Antriebsregler angesteuerten Achse erfasst. Der Antriebsregler mit der integrierten Überwachungseinheit kann dann die Achsstellung der zugehörigen Roboterachse direkt von dem zugehörigen Geber abfragen. Die Achsstellungen der anderen Roboterachsen werden dagegen von der Überwachungseinheit über die Datenverbindung von den anderen Antriebsreglern und den zugehörigen Gebern abgefragt.

Die Überwachungseinheit in dem Antriebsregler berechnet dann aus den verschiedenen Achsstellungen der einzelnen Roboterachsen vorzugsweise durch eine Transformationsberechnung die Roboterstellung des gesamten Roboters. Derartige Transformationsberechnungen sind an sich aus dem Stand der Technik bekannt und müssen deshalb nicht näher beschrieben werden. Beispielsweise kann die Überwachungseinheit in dem Antriebsregler die räumliche Position eines Referenzpunktes auf dem Roboter ermitteln, wobei diese räumliche Position dann mit gesperrten Räumen verglichen werden kann, um Kollisionen zu vermeiden. Bei dem Referenzpunkt auf dem Roboter kann es sich beispielsweise um den sogenannten Tool-Center-Point (TCP) handeln, jedoch kommen im Rahmen der Erfindung auch andere Referenzpunkte auf dem Roboter in Frage. Darüber hinaus besteht im Rahmen der Erfindung auch die Möglichkeit, dass die räumliche Position zahlreicher Referenzpunkte auf dem Roboter ermittelt und im Rahmen der Kollisionsüberwachung berücksichtigt wird. Beispielsweise kann an jeder beweglichen Roboterachse ein Referenzpunkt im Rahmen der Kollisionsüberwachung berücksichtigt werden. Darüber hinaus ist im Rahmen der Erfindung auch eine Hüllkurvenüberwachung des kompletten Roboters möglich.

In dem bevorzugten Ausführungsbeispiel der Erfindung erfolgt die Kollisionsüberwachung nicht nur in dem Antriebsregler mit der integrierten Überwachungseinheit, sondern auch in der zentralen Robotersteuerung, um bei der Kollisionsüberwachung eine Redundanz zu schaffen. Die zentrale Robotersteuerung weist deshalb vorzugsweise ebenfalls eine Überwachungseinheit auf, die eine Kollisionsüberwachung durchführt, um eine Kollision des Roboters mit Raumbegrenzungen oder Personen zu verhindern. Auch die in die zentrale Roboterstellung integrierte Überwachungseinheit kann wahlweise softwaremäßig oder hardwaremäßig realisiert werden, wie bereits vorstehend zu der in den Antriebsregler integrierten Überwachungseinheit ausgeführt wurde.

Es wurde bereits eingangs erwähnt, dass die zentrale Robotersteuerung die einzelnen Antriebsregler der jeweiligen Roboterachsen entsprechend einem vorgegebenen Steuerprogramm mit Steuerbefehlen ansteuert. Die zentrale Robotersteuerung gibt also vorzugsweise Soll-Werte für die Achsstellungen der einzelnen Roboterachsen vor, wohingegen die einzelnen Antriebsregler über die zugehörigen Geber Ist-Wert der Achsstellungen ermitteln. Die Überwachungseinheit in der zentralen Robotersteuerung führt die Kollisionsüberwachung deshalb vorzugsweise auf der Grundlage der vorgegebenen Soll-Werte für die Roboterstellung durch, wohingegen die Überwachungseinheit in dem Antriebsregler die Kollisionsüberwachung auf der Grundlage der gemessenen Ist-Werte durchführt. Die Durchführung der Kollisionsüberwachung auf der Grundlage von Soll-Werten bietet den Vorteil, dass eine Vorausberechnung erfolgen kann. Dies bedeutet, dass eine falsche Position oder eine falsche Geschwindigkeit schon erkannt werden kann, bevor eine Fehlersituation wirksam werden kann, so dass eine Abschaltung möglich ist, bevor die eigentliche Gefahrensituation auftritt.

In dem bevorzugten Ausführungsbeispiel der Erfindung übermittelt die in den Antriebsregler integrierte Überwachungseinheit Daten (z.B. Ist-Werte der Achsstellungen) der Kollisionsüberwachung über die Datenverbindung an die Überwachungseinheit in der zentralen Robotersteuerung, so dass die Überwachungseinheit in der zentralen Roboterprüfung dann auch überprüfen kann, ob die Kollisionsüberwachung in dem Antriebsregler konsistent ist mit der Kollisionsüberwachung in der zentralen Robotersteuerung. Bei einer Diskrepanz zwischen den verschiedenen Kollisionsüberwachungen kann dann eine Fehlermaßnahme (z.B. Notabschaltung) eingeleitet werden.

Darüber hinaus ist in dem bevorzugten Ausführungsbeispiel auch vorgesehen, dass die Überwachungseinheit in der zentralen Robotersteuerung Daten (z.B. Soll-Werte der Achsstellungen) der Kollisionsüberwachung über die Datenverbindung an die Überwachungseinheit in dem Antriebsregler übermittelt. Dies ermöglicht es auch der Überwachungseinheit in dem Antriebsregler, die Ergebnisse der verschiedenen Kollisionsüberwachungen in der zentralen Robotersteuerung einerseits und in dem Antriebsregler andererseits auf eine Konsistenz hin zu überprüfen. Bei einer Diskrepanz zwischen diesen Kollisionsüberwachungen kann dann auch die in den Antriebsregler integrierte Überwachungseinheit eine Fehlermaßnahme (z.B. Notabschaltung) auslösen.

Eine Fehlermaßnahme (z.B. Notabschaltung) wird jedoch in der Regel nicht nur dann eingeleitet, wenn eine Diskrepanz zwischen den verschiedenen Kollisionsüberwachungen auftritt. Vielmehr wird eine Fehlermaßnahme auch dann eingeleitet, wenn die Kollisionsüberwachung in der zentralen Robotersteuerung und/oder die Kollisionsüberwachung in dem Antriebsregler anzeigt, dass eine Kollision droht. Diese Prüfung kann in herkömmlicher Weise erfolgen, wie beispielsweise in EP 1 332 841 A2 beschrieben ist, so dass der Inhalt dieser Patentanmeldung hinsichtlich der Durchführung der eigentlichen Kollisionsüberwachung der vorliegenden Beschreibung in vollem Umfang zuzurechnen ist.

Der Datenaustausch zwischen der Überwachungseinheit in der zentralen Robotersteuerung und der in den Antriebsregler integrierten Überwachungseinheit kann optional auch durch entsprechende diversitäre Kontrollmechanismen wie z.B. negiertem und ver-ODER-tem redundant übertragenem Signal zusätzlich sicherheitstechnisch verbessert werden.

Darüber hinaus ist zu bemerken, dass durch die beiden unabhängigen Überwachungseinheiten eine diversitäre Überwachung erfolgen kann.

Beispielsweise kann im Rahmen der Kollisionsüberwachung eine Geschwindigkeitsüberwachung erfolgen. Dies bedeutet, dass während der Bewegung des Roboters stets überprüft wird, ob die Robotergeschwindigkeit unter Berücksichtigung des aktuellen Abstands zu den vorgegebenen Raumbegrenzungen einen kritischen Wert überschreitet, was dann zu einer Fehlermaßnahme (z.B. Notabschaltung) führen würde.

Darüber hinaus kann im Rahmen der Kollisionsüberwachung eine Positionsüberwachung erfolgen. Dies bedeutet, dass bei der Bewegung des Roboters stets überprüft wird, ob der Sicherheitsabstand zu den Raumbegrenzungen (z.B. Kabinenwand) unter Berücksichtigung der aktuellen Robotergeschwindigkeit einen kritischen Sicherheitsabstand unterschreitet, was dann ebenfalls zur Einleitung einer Fehlermaßnahme (z.B. Notabschaltung) führt.

Es wurde bereits vorstehend mehrfach erwähnt, dass es sich bei der Fehlermaßnahme um eine Notabschaltung handeln kann, die beispielsweise in herkömmlicher Weise über die zentrale Robotersteuerung aktiviert werden kann. Falls also die Überwachungseinheit in der zentralen Robotersteuerung eine Fehlermaßnahme einleiten sollte, so kann dies in herkömmlicher Weise direkt erfolgen. Falls dagegen die Überwachungseinheit in dem Antriebsregler eine Fehlermaßnahme einleiten muss, so kann der Antriebsregler über die Datenverbindung zu der zentralen Robotersteuerung einen entsprechenden Befehl an die zentrale Robotersteuerung senden, die dann die Fehlermaßnahme einleitet.

Alternativ ist jedoch auch möglich, dass die Überwachungseinheit in dem Antriebsregler direkt eine Fehlermaßnahme einleitet. Hierzu kann in den Antriebsreglern beispielsweise die Funktion STO (Safe Torque Off) verwendet werden, um eine Sperre der jeweiligen Reglerstufe zu ermöglichen.

Alternativ kann diese Fehlermaßnahme auch über einen digitalen Ausgang des Antriebsreglers eingeleitet werden.

Weiterhin ist zu erwähnen, dass der im Rahmen der Erfindung verwendete Begriff einer Fehlermaßnahme nicht auf eine abrupte Notabschaltung beschränkt ist, sondern auch andere Fehlermaßnahmen umfasst. Beispielsweise kann vor der eigentlichen Abschaltung eine sogenannte Bremsrampe gefahren werden, d.h. die Geschwindigkeit der Roboterbewegung wird vor der Notabschaltung rampenförmig heruntergefahren, wobei diese sogenannte Bremsrampe wahlweise von der zentralen Robotersteuerung oder von dem Antriebsregler mit der integrierten Überwachungseinheit angesteuert werden kann. Die Bremsrampe kann so gestaltet sein, dass Bahntreu gebremst wird, um z.B. Kollisionen zu vermeiden bzw. das Repositionieren (Repos) zu vereinfachen.

Es wurde bereits vorstehend erwähnt, dass den einzelnen Antriebsreglern in der Regel ein Geber zugeordnet ist, der die Achsstellung der zugehörigen Roboterachse misst und an den Antriebsregler übermittelt. Bei der Ermittlung der Ist-Werte der Achsstellungen können die Geberdaten also direkt über den Antriebsregler eingelesen und an die anderen Antriebsregler verteilt werden. Alternativ oder zusätzlich besteht jedoch auch die Möglichkeit, dass die Geberdaten nicht aus dem Antriebsregler ausgelesen werden, sondern über die Feedbackleitung abgegriffen werden, die den Geber mit dem zugehörigen Antriebsregler verbindet, so dass die Verteilung dann auf verschiedenen Pfaden erfolgen kann.

Weiterhin können im Rahmen der Erfindung Kontrollmechanismen vorgesehen sein und Plausibilitätsprüfungen durchgeführt werden, um die Gebersignale auf ihre Richtigkeit hin zu überprüfen.

Ferner besteht im Rahmen der Erfindung auch die Möglichkeit, dass die Ist-Stellungen der einzelnen Roboterachsen durch ein redundantes Gebersystem gemessen werden, wozu jedoch zusätzliche Geber erforderlich sind.

Zur Positionsverifizierung nach dem Einschalten oder zur Kontrolle im laufenden Betrieb kann eine Position angefahren werden, welche nur bei richtiger Stellung der Roboterachsen erreicht werden kann, wozu vorzugsweise die TCP-Position abgefragt wird. Diese Verifizierung kann wahlweise durch eine spezielle Synchronisierungsfahrt oder durch eine spezielle Bewegung im Bearbeitungsprozess erfolgen.

Zum sicheren Anhalten der Roboterbewegung kann im Fehlerfall zusätzlich die Haltebremse der Antriebe verwendet werden, welche dann gleichzeitig mit dem Start der Bremsbewegung oder alternativ auch verzögert einfällt. Hierbei kann auch auf im Antriebsregler vorhandene Funktionen zur Überwachung und Ansteuerung der Bremse zurückgegriffen werden. Auch ein Bremsentest kann im Rahmen der Erfindung in die Überwachung des Gesamtsystems mit eingebunden werden.

Weiterhin ist zu erwähnen, dass die Erfindung nicht auf das vorstehend beschriebene Steuersystem beschränkt ist, sondern auch eine komplette Lackieranlage mit einem solchen Steuersystem und mindestens einem Roboter (z.B. Lackier-, Handhabungs-, Klebe- oder Sealing-Roboter) umfasst, der von dem Steuersystem angesteuert wird.

Bei dieser Gelegenheit ist auch zu erwähnen, dass es sich bei dem Roboter nicht notwendigerweise um einen Lackierroboter oder einen Handhabungsroboter (z.B. Türöffner, Haubenöffner) handelt. Vielmehr eignet sich das erfindungsgemäße Sicherheitskonzept auch allgemein zur Steuerung von Robotern anderer Typen.

Schließlich ist noch zu erwähnen, dass die Erfindung auch ein entsprechendes Steuerverfahren umfasst, wie sich bereits aus der vorstehenden Beschreibung ergibt.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung eines erfindungsgemäßen Steuersystems mit einer redundanten Kollisionsüberwachung in der zentralen Robotersteuerung einerseits und in einem der Antriebsregler andererseits,
- Figuren 2A und 2B: das erfindungsgemäße Sicherheitskonzept in Form eines Flussdiagramms.

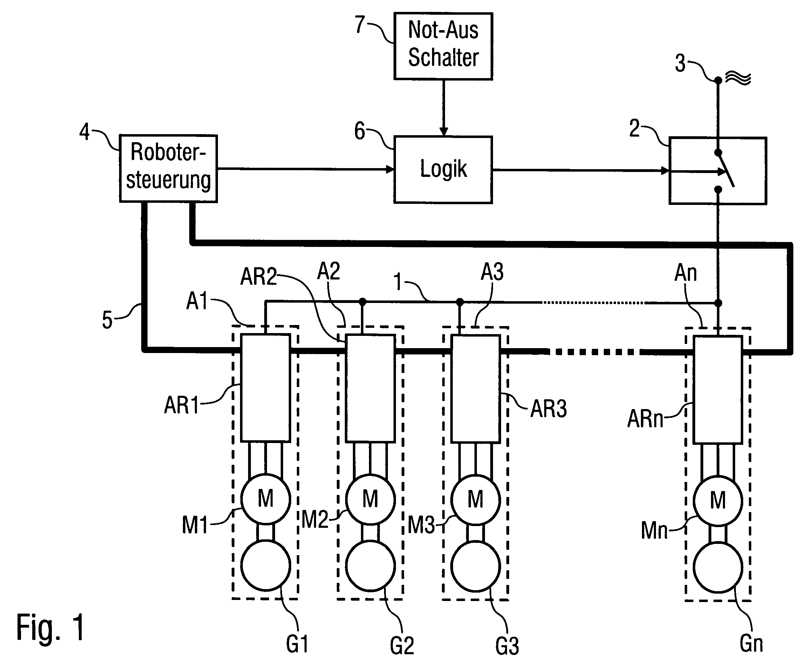

Figur 1 zeigt eine vereinfachte und schematische Darstellung eines erfindungsgemäßen Steuersystems zur Ansteuerung eines Lackierroboters oder eines Handhabungsroboters mit mehreren beweglichen Roboterachsen A1, A2, A3, ..., An, wobei derartige mehrachsige Roboter an sich hinlänglich bekannt sind und deshalb nicht näher beschrieben werden müssen.

Jede der Roboterachsen A1, A2, A3, ..., An weist zum mechanischen Antrieb jeweils einen Motor M1, M2, M3, ..., Mn auf, wobei es sich jeweils um einen Elektromotor handelt.

Darüber hinaus enthalten die einzelnen Roboterachsen jeweils einen Geber G1, G2, G3, ..., Gn, wobei die einzelnen Geber G1, G2, G3, ..., Gn die Stellungen der einzelnen Roboterachsen A1-An messen, d.h. Ist-Werte der Achsstellungen A1-An.

Weiterhin enthält jede der Roboterachsen A1-An einen Antriebsregler AR1, AR2, AR3, ..., ARn zur Ansteuerung der einzelnen Motoren M1-Mn.

Die einzelnen Antriebsregler AR1-ARn werden über eine dreiphasige Versorgungsleitung 1 über einen Notschalter 2 von einem hier nur schematisch dargestellten Drehstromnetz 3 mit dem zum Betrieb erforderlichen Strom versorgt.

Die eigentliche Steuerung der Roboterbewegung erfolgt durch eine zentrale Robotersteuerung 4, die mit den einzelnen Antriebsreglern AR1-ARn über einen Datenbus 5 verbunden ist, wobei der Datenbus 5 auch die einzelnen Antriebsregler AR1-ARn untereinander verbindet, um eine Kommunikation zwischen den einzelnen Antriebsreglern AR1-ARn zu ermöglichen, wie noch detailliert beschrieben wird.

Die Robotersteuerung 4 ermöglicht über eine Logikschaltung 6 eine Aktivierung des Notschalters 2, um die Antriebsregler AR1-ARn von dem Drehstromnetz 3 zu trennen und dadurch eine Notabschaltung des Roboters einzuleiten.

Darüber hinaus kann der Notschalter 2 auch über einen manuell betätigbaren Notschalter 7 aktiviert werden, wenn beispielsweise Personen in die Lackierkabine eintreten und eine Kollision zwischen den eintretenden Personen und dem Lackierroboter droht.

Im Folgenden wird nun das erfindungsgemäße Sicherheitskonzept beschrieben, das von dem dargestellten Steuersystem realisiert wird.

Die zentrale Robotersteuerung 4 gibt über den Datenbus 5 Steuerbefehle entsprechend einem vorgegebenen Steuerprogramm an die Antriebsregler AR1-ARn, wobei die Steuerbefehle Soll-Werten für die Achsstellungen der einzelnen Roboterachsen A1-An entsprechen.

Zur Vermeidung einer Kollision des Roboters mit Raumbegrenzungen (z.B. Kabinenwand der Lackierkabine) führt eine in die zentrale Robotersteuerung 4 integrierte Überwachungseinheit eine Kollisionsüberwachung durch. Dabei vergleicht die in die zentrale Robotersteuerung 4 integrierte Überwachungseinheit die von dem Steuerprogramm vorgegebenen Soll-Werte für die Achsstellungen der einzelnen Roboterachsen A1-An mit gesperrten Bereichen und aktiviert ggf. über die Logikschaltung 6 den Notschalter 2, um eine Notabschaltung einzuleiten, wenn eine Kollision droht. Die in die zentrale Robotersteuerung 4 integrierte Überwachungseinheit führt die Kollisionsüberwachung auf der Grundlage von Soll-Werten für die Achsstellungen der einzelnen Roboterachsen A1-An durch.

Darüber hinaus ist in den Antriebsregler AR1 ebenfalls eine Überwachungseinheit integriert, die eine Kollisionsüberwachung auf der Grundlage von Ist-Werten der Achsstellungen der einzelnen Roboterachsen A1-An durchführt. Hierzu liest die in den Antriebsregler AR1 integrierte Überwachungseinheit die Achsstellung der zugehörigen Roboterachse A1 von dem zugehörigen Geber G1 aus. Die Achsstellungen der anderen Roboterachsen A2-An fragt die in den Antriebsregler AR1 integrierte Überwachungseinheit dagegen über den Datenbus 5 von den anderen Antriebsreglern AR2-ARn und den zugehörigen Gebern G2-Gn ab. Die in den Antriebsregler AR1 integrierte Überwachungseinheit kennt also die Achsstellungen sämtlicher Roboterachsen A1-An des Roboters und berechnet daraus entsprechend einer Transformationsberechnung die Roboterstellung des gesamten Roboters, indem beispielsweise die räumliche Position des Tool-Center-Points (TCP) berechnet wird. Die in den Antriebsregler AR1 integrierte Überwachungseinheit überprüft dann auf der Grundlage des so ermittelten Ist-Werts des Referenzpunkts, ob eine Kollision mit Raumbegrenzungen (z.B. Kabinenwand) droht.

Falls dies der Fall ist, so kann die in den Antriebsregler AR1 integrierte Überwachungseinheit über den Datenbus 5 die zentrale Robotersteuerung 4 veranlassen, eine Notabschaltung durchzuführen, wie bereits vorstehend beschrieben wurde.

Alternativ besteht jedoch auch die Möglichkeit, dass die in den Antriebsregler AR1 integrierte Überwachungseinheit die Funktion STO (Safe Torque Off) aktiviert, um die Reglerstufen zu sperren, wobei die in den Antriebsregler AR1 integrierte Überwachungseinheit über den Datenbus 5 auch die anderen Antriebsregler AR2-ARn entsprechend ansteuern kann.

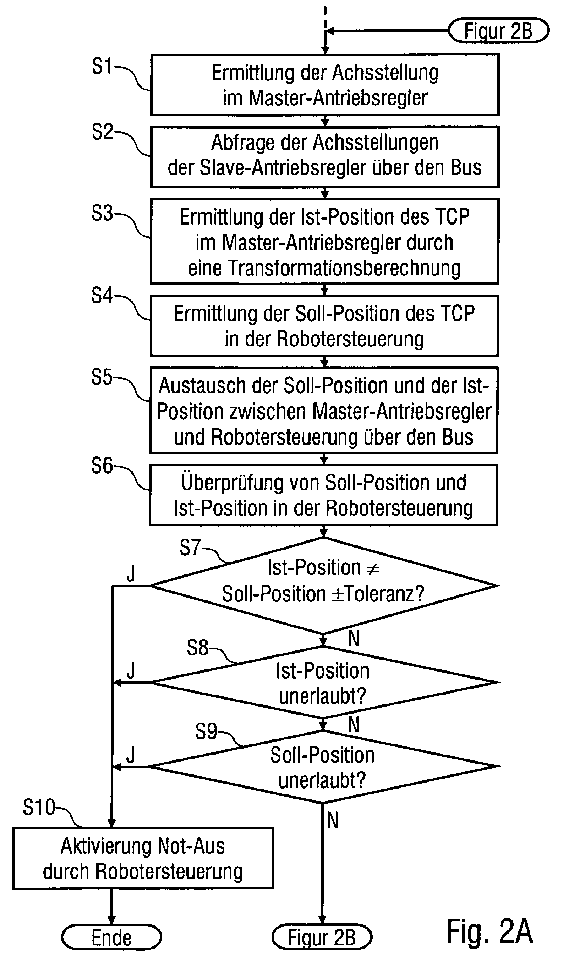

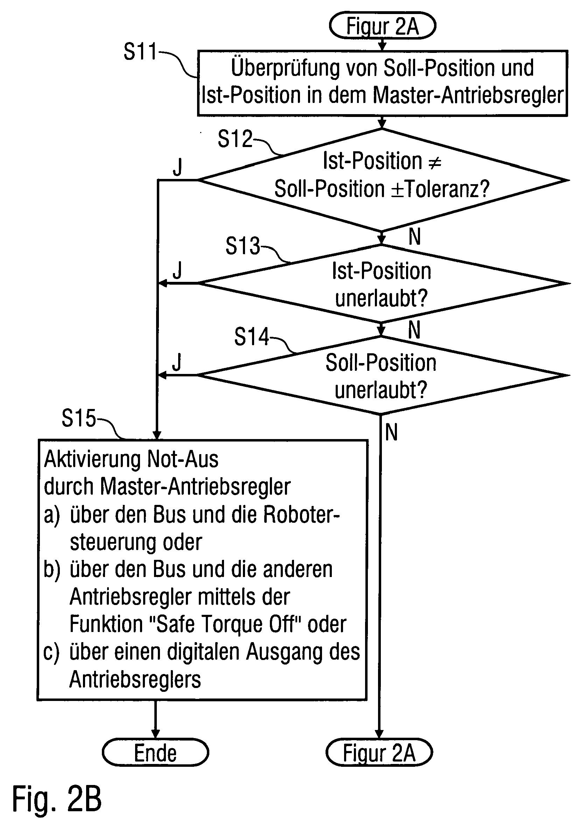

Im Folgenden wird nun unter Bezugnahme auf das Flussdiagramm in den Figuren 2A und 2B das erfindungsgemäße Steuerverfahren nochmals detailliert beschrieben.

In einem ersten Schritt S1 ermittelt der als Master-Antriebsregler dienende Antriebsregler AR1 die Achsstellung der zugehörigen Roboterachse A1 über den zugehörigen Geber G1.

In einem zweiten Schritt S2 fragt der als Master-Antriebsregler dienende Antriebsregler AR1 dann die Achsstellungen der anderen Roboterachsen A2-An über den Datenbus 5 von den anderen Antriebsreglern AR2-ARn und den zugehörigen Gebern G2-Gn ab.

In einem nächsten Schritt S3 ermittelt die in den Master-Antriebsregler AR1 integrierte Überwachungseinheit dann durch eine Transformationsberechnung die Ist-Position des TCP.

Parallel dazu wird in einem Schritt S4 in der zentralen Robotersteuerung 4 die Soll-Position des TCP ermittelt, wobei die Soll-Position durch ein vorgegebenes Steuerprogramm vorgegeben wird.

In einem Schritt S5 erfolgt dann ein Austausch der Soll-Position und der Ist-Position zwischen dem Master-Antriebsregler AR1 und der zentralen Robotersteuerung 4 über den Datenbus 5.

In einem nächsten Schritt S6 erfolgt dann eine Überprüfung der Soll-Position und der Ist-Position in der zentralen Robotersteuerung.

Falls in einem Schritt S7 erkannt wird, dass die Ist-Position von der Soll-Position wesentlich abweicht, so wird in einem Schritt S10 eine Notabschaltung ausgelöst.

Darüber hinaus wird eine Notabschaltung in dem Schritt S10 auch dann ausgelöst, wenn die zentrale Robotersteuerung 4 in den Schritten S8 bzw. S9 erkennt, dass die Ist-Position bzw. die Soll-Position des TCP in einem kollisionsgefährdeten Bereich liegt.

Parallel dazu erfolgt dann auch in dem Master-Antriebsregler AR1 in dem Schritt S11 eine Überprüfung der Soll-Position und der Ist-Position.

Falls die Überprüfung in dem Schritt S12 eine Diskrepanz zwischen Ist-Position und Soll-Position ergibt, so wird in dem Schritt S15 eine Notabschaltung eingleitet.

Das Gleiche ist der Fall, wenn der Master-Antriebsregler AR1 in den Schritten S13 bzw. S14 erkennt, dass die Ist-Position bzw. die Soll-Position in einem kollisionsgefährdeten Bereich liegt.

Die Aktivierung der Notabschaltung in dem Schritt S15 kann wahlweise über den Datenbus 5 und die zentrale Robotersteuerung 4 oder mittels der Funktion STO (Safe Torque Off) oder über einen digitalen Ausgang des Antriebsreglers erfolgen.

Darüber hinaus ist im Rahmen dieses Sicherheitskonzepts auch eine Geschwindigkeitsüberwachung möglich, wie sie beispielsweise in EP 1 332 841 A2 beschrieben ist, so dass auf eine erneute Beschreibung des Ablaufs der Geschwindigkeitsüberwachung an dieser Stelle verzichtet werden kann.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- A1-An: Roboterachsen
- M1-Mn: Motoren
- G1-Gn: Geber
- AR1-ARn: Antriebsregler
- 1: Dreiphasige Versorgungsleitung
- 2: Notschalter
- 3: Drehstromnetz
- 4: Zentrale Robotersteuerung
- 5: Datenbus
- 6: Logikschaltung
- 7: Notschalter

## Patentansprüche

1. Steuersystem zur Steuerung eines Roboters mit mehreren beweglichen Roboterachsen (A1-An), insbesondere für einen Lackier-, Sealing-, Klebe-, Montage- oder Handhabungsroboter in einer Lackieranlage für Kraftfahrzeugkarosseriebauteile, mit
a) einer zentralen Robotersteuerung (4) zur Steuerung des Roboters entsprechend einem vorgegebenen Steuerprogramm,
b) mehreren Antriebsreglern (AR1-ARn) zur Ansteuerung der einzelnen beweglichen Roboterachsen (A1-An), wobei jeder der Antriebsregler (AR1-ARn) einer der Roboterachsen (A1-An) zugeordnet ist,
c) mehreren Gebern (G1-Gn), wobei jedem der Antriebsregler (AR1-ARn) ein Geber (G1-Gn) zugeordnet ist, der die Achsstellung der von dem Antriebsregler (AR1-ARn) angesteuerten Roboterachse (A1-An) erfasst,
d) einer Datenverbindung (5) zwischen der zentralen Robotersteuerung (4) und den einzelnen Antriebsreglern (AR1-ARn) zur Übertragung von Steuerbefehlen von der Robotersteuerung (4) an die einzelnen Antriebsregler (AR1-ARn), und
e) einer Überwachungseinheit in zumindest einem der Antriebsregler, wobei
e1) die in dem einen Antriebsregler (AR1) angeordnete Überwachungseinheit eine Kollisionsüberwachung durchführt, um eine Kollision des Roboters mit Raumbegrenzungen oder_Personen zu verhindern, und
e2) die in dem einen Antriebsregler (AR1) angeordnete Überwachungseinheit die Achsstellung der zugehörigen Roboterachse (A1) durch den zugehörigen Geber (G1) ermittelt,
**dadurch gekennzeichnet,**
f) **dass** die Datenverbindung (5) auch eine Datenübertragung zwischen der Überwachungseinheit in dem einen Antriebsregler (AR1) und den anderen Antriebsreglern (AR2-ARn) ermöglicht, um Achsstellungen der einzelnen Roboterachsen (A1-An) von den einzelnen Antriebsreglern (AR2-ARn) zu dem Antriebsregler (AR1) mit der Überwachungseinheit zu übertragen,
g) **dass** die Überwachungseinheit in dem einen Antriebsregler (AR1) die Achsstellung der anderen Roboterachsen (A2-An) über die Datenverbindung (5) von den anderen Antriebsreglern (AR-ARn) und den zugehörigen Gebern (G2-Gn) abfragt,
h) **dass** die Überwachungseinheit in dem einen Antriebsregler (AR1) aus den Achsstellungen der einzelnen Roboterachsen (A1-An) durch eine Transformationsberechung die Roboterstellung des Roboters ermittelt, und
i) **dass** die Roboterstellung durch die räumliche Position mindestens eine Referenzpunktes auf dem Roboter wiedergegeben wird.

2. Steuersystem nach Anspruch 1, **dadurch gekennzeichnet, dass** zur Schaffung einer Redundanz bei der Kollisionsüberwachung auch die zentrale Robotersteuerung (4) eine Überwachungseinheit aufweist, die eine Kollisionsüberwachung durchführt, um eine Kollision des Roboters mit Raumbegrenzungen oder Personen zu verhindern.

3. Steuersystem nach Anspruch 2, **dadurch gekennzeichnet,**
a) **dass** die Überwachungseinheit in dem einen Antriebsregler (AR1) Daten der Kollisionsüberwachung über die Datenverbindung (5) an die Überwachungseinheit in der zentralen Robotersteuerung (4) übermittelt, und/oder
b) **dass** die Überwachungseinheit in der zentralen Robotersteuerung (4) Daten der Kollisionsüberwachung über die Datenverbindung (5) an die Überwachungseinheit in dem einen Antriebsregler (AR1) übermittelt.

4. Steuersystem nach Anspruch 2 oder 3,
**dadurch gekennzeichnet,**
a) **dass** das Ergebnis der Kollisionsüberwachung in dem Antriebsregler (AR1) mit dem Ergebnis der Kollisionsüberwachung in der zentralen Robotersteuerung (4) verglichen wird,
b) **dass** eine Fehlermaßnahme eingeleitet wird, wenn eine Diskrepanz auftritt zwischen der Kollisionsüberwachung in dem Antriebsregler (AR1) einerseits und der Kollisionsüberwachung in der zentralen Robotersteuerung (4) andererseits.

5. Steuersystem nach Anspruch 4, **dadurch gekennzeichnet,**
a) **dass** die Überwachungseinheit in der zentralen Robotersteuerung (4) die Ergebnisse der Kollisionsüberwachungen vergleicht und bei einer Diskrepanz die Fehlermaßnahme einleitet, und/oder
b) **dass** die Überwachungseinheit in dem einen Antriebsregler (AR1) die Ergebnisse der Kollisionsüberwachungen vergleicht und bei einer Diskrepanz die Fehlermaßnahme einleitet.

6. Steuersystem nach einem der vorhergehenden Ansprüche,
**dadurch gekennzeichnet,**
a) **dass** die Überwachungseinheit in der zentralen Robotersteuerung (4) eine Fehlermaßnahme einleitet, wenn die Kollisionsüberwachung eine drohende Kollision anzeigt, und/oder
b) **dass** die Überwachungseinheit in dem einen Antriebsregler (AR1) eine Fehlermaßnahme einleitet, wenn die Kollisionsüberwachung eine drohende Kollision anzeigt.

7. Steuersystem nach einem der vorhergehenden Ansprüche,
**dadurch gekennzeichnet,**
a) **dass** die Überwachungseinheit in der zentralen Robotersteuerung (4) Soll-Werte für die Roboterstellung vorgibt und die Kollisionsüberwachung auf der Grundlage der Soll-Werte durchführt, und/oder
b) **dass** die Überwachungseinheit in dem einen Antriebsregler (AR1) Ist-Werte für die Roboterstellung ermittelt und die Kollisionsüberwachung auf der Grundlage der Ist-Werte durchführt.

8. Steuersystem nach einem der vorhergehenden Ansprüche,
**dadurch gekennzeichnet,**
a) **dass** die Fehlermaßnahme eine Notabschaltung ist, die über die zentrale Robotersteuerung (4) aktiviert wird, und/oder
b) **dass** die Fehlermaßnahme eine Sperrung eines oder mehrere der Antriebsregler umfasst.

9. Lackieranlage mit einem Steuersystem nach einem der vorhergehenden Ansprüche und einem Lackier-, Sealing-, Klebe-, Montage- oder Handhabungsroboter, der von dem Steuersystem gesteuert wird.

10. Steuerverfahren zur Steuerung eines Roboters mit mehreren beweglichen Roboterachsen (A1-An), insbesondere für einen Lackier-, Sealing-, Klebe-, Montage- oder Handhabungsroboter in einer Lackieranlage für Kraftfahrzeugkarosseriebauteile, mit
a) Steuerung des Roboters durch eine zentrale Robotersteuerung (4) entsprechend einem vorgegebenen Steuerprogramm,
b) Ansteuerung der einzelnen beweglichen Roboterachsen (A1-An) durch jeweils einen Antriebsregler (AR1-ARn), sowie
c) Übertragung von Steuerbefehlen von der zentralen Robotersteuerung (4) an die einzelnen Antriebsregler (AR1-ARn) über eine Datenverbindung (5),
d) Durchführung einer Kollisionsüberwachung in zumindest einem der Antriebsregler (AR1), um eine Kollision des Roboters mit Raumbegrenzungen oder Personen zu verhindern,
e) Erfassen der Achsstellungen der einzelnen Roboterachsen (A1-An) durch jeweils einen Geber (G1-Gn), wobei jedem der Antriebsregler (AR1-ARn) einer der Geber (G1-Gn) zugeordnet ist,
**gekennzeichnet durch** folgende Schritte:
f) Übertragung der erfassten Achsstellungen von den einzelnen Antriebsreglern (AR1-ARn) über eine Datenverbindung zu dem Antriebsregler (AR1) mit der Überwachungseinheit, und
g) Berechnung der Roboterstellung in dem einen Antriebsregler (AR1) mit der Überwachungseinheit **durch** eine Transformationsberechnung aus den Achsstellungen der einzelnen Roboterachsen (A1-An), wobei die Roboterstellung **durch** die räumliche Position mindestens eine Referenzpunktes auf dem Roboter wiedergegeben wird.

## Claims

1. Control system for controlling a robot comprising several movable robot axes (A1-An), particularly for a painting, sealing, glueing, mounting or handling robot in a paint installation for motor vehicle body parts, with
a) a central robot controller (4) for controlling the robot according to a predetermined control program,
b) several drive controllers (AR1-ARn) for controlling the individual movable robot axes (A1-An), wherein each of the drive controllers (AR1-ARn) is associated to one of the robot axes (A1-An),
c) several transducers (G1-Gn), wherein each of the drive controllers (AR1-ARn) is associated to one of the transducers (G1-Gn) which detects the axis position of the robot axis (A1-An) controlled by the drive controller (AR1-ARn),
d) a data connection (5) between the central robot controller (4) and the individual drive controllers (AR1-ARn) for transmission of control commands from the robot controller (4) to the individual drive controllers (AR1-ARn), and
e) a monitoring unit in at least one of the drive controllers, wherein
e1) the monitoring unit arranged in the one drive controller (AR1) performs a collision control in order to avoid a collision of the robot with spatial boundaries or persons, and
e2) the monitoring unit arranged in the one drive controller (AR1) determines the axis position of the associated robot axis (A1) by the associated transducer (G1),
**characterized in that**
f) the data connection (5) also allows a data transmission between the monitoring unit in the one drive controller (AR1) and the other drive controllers (AR2-ARn) in order to transmit axis positions of the individual robot axes (A1-An) from the individual drive controllers (AR2-ARn) to the drive controller (AR1) with the monitoring unit,
g) the monitoring unit in the one drive controller (AR1) requests the axis position of the other robot axes (A2-An) via the data connection (5) from the other drive controllers (AR-ARn) in the associated transducers (G2-Gn),
h) the monitoring unit in the one drive controller (AR1) determines the robot position of the robot from the axis positions of the individual robot axes (A1-An) by a transformation calculation, and
i) the robot position is represented by the spatial position of at least one reference point on the robot.

2. Control system according to claim 1, **characterized in that**, for providing redundancy during collision control, the central robot controller (4) comprises a monitoring unit as well, which performs a collision control in order to avoid a collision of the robot with spatial boundaries or persons.

3. Control system according to claim 2, **characterized**
a) **in that** the monitoring unit in the one drive controller (AR1) transmits data of the collision control via the data connection (5) to the monitoring unit in the central robot controller (4), and/or
b) the monitoring unit in the central robot controller (4) transmits data of the collision control via the data connection (5) to the monitoring unit in the one drive controller (AR1).

4. Control system according to claim 2 or 3,
**characterized**
a) **in that** the result of the collision control in the drive controller (AR1) is compared with the result of the collision control in the central robot controller (4),
b) **in that** an error action is initiated if a discrepancy occurs between the collision control in the drive controller (AR1) on the one hand and the collision control in the central robot controller (4) on the other hand.

5. Control system according to claim 4, **characterized**
a) **in that** the monitoring unit in the central robot controller (4) compares the results of the collision controls and initiates an error action in case of a discrepancy, and/or
b) **in that** the monitoring unit in the one drive controller (AR1) compares the results of the collision controls and initiates an error action in case of a discrepancy.

6. Control system according to one of the preceding claims, **characterized**
a) **in that** the monitoring unit in the central robot controller (4) initiates an error action if the collision control indicates an imminent collision, and/or
b) the monitoring unit in the one drive controller (AR1) initiates an error action, if the collision control indicates an imminent collision.

7. Control system according to one of the preceding claims, **characterized**
a) **in that** the monitoring unit in the central robot controller (4) gives target values for the robot position and performs the collision control on the basis of the target values, and/or
b) **in that** the monitoring unit in the one drive controller (AR1) determines actual values for the robot position and performs the collision control on the basis of the actual values.

8. Control system according to one of the preceding claims, **characterized**
a) **in that** the error action is an emergency shutdown which is activated via the central robot controller (4), and/or
b) the error action includes blocking of one or more of the drive controllers.

9. Painting installation comprising a control system according to one of the preceding claims and a paint, sealing, glueing, mounting or handling robot which is controlled by the control system.

10. Control method for controlling a robot with several movable robot axes (A1-An), particularly for a painting, sealing, glueing, mounting or handling robot in a painting installation for motor vehicle body parts, comprising
a) controlling the robot by a central robot controller (4) according to a predetermined control program,
b) controlling the individual movable robot axes (A1-An) by a drive controller (AR1-ARn) each, and
c) transmission of control commands from the central robot controller (4) to the individual drive controllers (AR1-ARn) via a data connection (5),
d) performing a collision control in at least one of the drive controllers (AR1) in order to avoid a collision of the robot with spatial boundaries or persons,
e) detection of the axis positions of the individual robot axes (A1-An) by a transducer (G1-Gn) each, wherein each of the drive controllers (AR1-ARn) is associated to one of the transducers (G1-Gn),
**characterized by** the following steps:
f) transmission of the detected axis positions from the individual drive controllers (AR1-ARn) via a data connection to the drive controller (AR1) comprising the monitoring unit, and
g) calculation of the robot position in the one drive controller (AR1) with the monitoring unit by a transformation calculation from the axis positions of the individual robot axes (A1-An), wherein the robot position is represented by the spatial position of at least one reference point on the robot.

## Revendications

1. Système de commande pour la commande d'un robot avec plusieurs axes de robot mobiles (A1-An), plus particulièrement pour un robot de peinture, de scellement, de collage, de montage ou de manutention dans une installation de peinture pour des composants de carrosseries de véhicules, avec
a) une commande centrale de robot (4) pour la commande du robot en fonction d'un programme de commande prédéterminé,
b) plusieurs régulateurs d'entraînement (ER1-ARn) pour la commande des différents axes du robot (A1-An), chacun des régulateurs d'entraînement (AR1-ARn) correspondant à un des axes du robot (A1-An),
c) plusieurs capteurs (G1-Gn), un capteur (G1-Gn) correspondant à chacun des régulateurs d'entraînement (AR1-ARn), qui mesure la position de l'axe du robot (A1-An) commandé par le régulateur d'entraînement (AR1-ARn),
d) une liaison de données (5) entre la commande centrale du robot (4) et les différents régulateurs d'entraînement (AR1-ARn) pour la transmission d'instructions de commande par la commande du robot (4) aux différents régulateurs d'entraînement (AR1-ARn), et
e) une unité de surveillance dans au moins un des régulateurs d'entraînement,
e1) l'unité de surveillance disposée dans un régulateur d'entraînement (AR1) effectuant une surveillance de collision afin d'éviter une collision du robot avec les limites du local ou les personnes, et
e2) l'unité de surveillance disposée dans un régulateur d'entraînement (AR1) déterminant la position de l'axe correspondant du robot (A1) à l'aide du capteur correspondant (G1),
**caractérisé en ce que**
f) la liaison de données (5) permet également une transmission de données entre l'unité de surveillance dans le régulateur d'entraînement (AR1) et les autres régulateurs d'entraînement (AR2-ARn) afin de transmettre les positions des différents axes du robot (A1-An) des régulateurs d'entraînement (AR2-ARn) vers le régulateur d'entraînement (AR1) avec l'unité de surveillance,
g) l'unité de surveillance dans le régulateur d'entraînement (AR1) interroge la position des autres axes du robot (A2-An) par l'intermédiaire de la liaison de données (5) provenant des autres régulateurs d'entraînement (AR-ARn) et des capteurs correspondants (G2-Gn),
h) l'unité de surveillance dans le régulateur d'entraînement (AR1) détermine, à partir des positions des différents axes du robot (A1-An), grâce à un calcul de transformée, la position du robot, et
i) la position du robot est donnée par la position dans l'espace d'au moins un point de référence sur le robot.

2. Système de commande selon la revendication 1, **caractérisé en ce que**, pour la réalisation d'une redondance pour la surveillance de collision, la commande centrale du robot (4) comprend également une unité de surveillance qui effectue une surveillance de collision afin d'éviter une collision du robot avec les limites du local ou des personnes.

3. Système de commande selon la revendication 2, **caractérisé en ce que**
a) l'unité de surveillance dans le régulateur d'entraînement (AR1) transmet les données de la surveillance de collision par l'intermédiaire de la liaison de données (5) à l'unité de surveillance dans la commande centrale du robot (4) et/ou
b) l'unité de surveillance dans la commande centrale du robot (4) transmet les données de la surveillance de collision par l'intermédiaire de la liaison de données (5) à l'unité de surveillance dans le régulateur d'entraînement (AR1).

4. Système de commande selon la revendication 2 ou 3, **caractérisé en ce que**
a) le résultat de la surveillance de collision dans le régulateur d'entraînement (AR1) est comparé avec résultat de la surveillance de collision dans la commande centrale du robot (4),
b) une mesure d'erreur est appliquée lorsqu'un écart apparaît entre la surveillance de collision dans le régulateur d'entraînement (AR1) d'une part et la surveillance de collision dans la commande centrale du robot (4) d'autre part.

5. Système de commande selon la revendication 4, **caractérisé en ce que**
a) l'unité de surveillance dans la commande centrale du robot (4) compare les résultats de la surveillance de collision et initie une mesure d'erreur lors d'un écart et/ou
b) l'unité de surveillance dans le régulateur d'entraînement (AR1) compare les résultats de la surveillance de collision et initie une mesure d'erreur lors d'un écart.

6. Système de commande selon l'une des revendications précédentes, **caractérisé en ce que**
a) l'unité de surveillance dans la commande centrale du robot (4) initie une mesure lorsque la surveillance de collision détecte une menace de collision et/ou
b) l'unité de surveillance dans le régulateur d'entraînement (AR1) initie une mesure lorsque la surveillance de collision détecte une menace de collision.

7. Système de commande selon l'une des revendications précédentes, **caractérisé en ce que**
a) l'unité de surveillance dans la commande centrale du robot (4) donne des valeurs de consigne pour la position du robot et effectue la surveillance de collision sur la base des valeurs de consigne et/ou
b) l'unité de surveillance dans le régulateur d'entraînement (AR1) détermine des valeurs effectives pour la position du robot et effectue la surveillance de collision sur la base des valeurs effectives.

8. Système de commande selon l'une des revendications précédentes, **caractérisé en ce que**
a) la mesure d'erreur est un arrêt d'urgence qui est activé par l'intermédiaire de la commande centrale du robot (4) et/ou
b) la mesure d'erreur comprend un blocage d'un ou plusieurs régulateurs d'entraînement.

9. Installation de peinture avec un système de commande selon l'une des revendications précédentes et un robot de peinture, de scellement, de collage, de montage ou de manutention, qui est commandé par le système de commande.

10. Procédé de commande pour la commande d'un robot avec plusieurs axes de robot mobiles (A1-An), plus particulièrement pour un robot de peinture, de scellement, de collage, de montage ou de manutention dans une installation de peinture pour des composants de carrosseries de véhicules avec
a) commande du robot par l'intermédiaire d'une commande centrale de robot (4) en fonction d'un programme de commande prédéterminé,
b) commande des différents axes mobiles du robot (A1-An) chacun par l'intermédiaire d'un régulateur d'entraînement (AR1-ARn) ainsi que
c) transmission d'instructions de commande par la commande centrale du robot (4) aux différents régulateurs d'entraînement (AR1-ARn) par l'intermédiaire d'une liaison de données (5),
d) réalisation d'une surveillance de collision dans au moins un des régulateurs d'entraînement (AR1) afin d'éviter une collision du robot avec les limites du local ou des personnes,
e) détermination des positions des différents axes du robot (A1-An) par des capteurs (G1-Gn) respectifs, un des capteurs (G1-Gn) correspondant à chacun des régulateurs d'entraînement (AR1-ARn),
**caractérisé par** les étapes suivantes :
f) transmission des positions déterminées des axes par les différents régulateurs d'entraînement (AR1-ARn) par l'intermédiaire d'une liaison de données au régulateur d'entraînement (AR1) avec l'unité de surveillance, et
g) calcul de la position du robot dans le régulateur d'entraînement (AR1) avec l'unité de surveillance par le calcul d'une transformée à partir des positions des différents axes du robot (A1-An), la position du robot étant représentée par la position dans l'espace d'au moins un point de référence sur le robot.
